# EUROPEAN PATENT APPLICATION

(11) **EP 4 496 422 A1**
(43) Date of publication of application: **22.01.2025**
(21) Application number: 23771032.2
(22) Date of filing: 10.03.2023
(51) Int. Cl.: H04W 76/23, H04W 76/14, H04W 4/40, H04W 92/10, H04W 92/18, H04W 24/10

(54) **METHOD FOR SWITCHING BETWEEN UU AND PC5**

(30) Priority: 16.03.2022 KR 20220032688; 06.04.2022 US 202263328254 P
(71) Applicant: LG Electronics Inc., Yeongdeungpo-gu Seoul 07336 (KR)
(72) Inventor: KIM, Laeyoung, Seoul 06772 (KR)
(74) Representative: Plasseraud IP
(86) International application number: PCT/KR2023/003283
(87) International publication number: WO 2023/177153

(57) **Abstract**

One embodiment of the present disclosure provides a method by which a UE performs communication. The method comprises the steps of: communicating with another UE through a PC5 path; switching from the PC5 path to a Uu path; determining to maintain a unicast link for the PC5 path; and determining, on the basis of PC5 signal strength of the unicast link, to switch back to the PC5 path.

## Description

### TECHNICAL FIELD

The present specification relates to mobile communications.

### BACKGROUND ART

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

An efficient method is needed for switching between PC5 and Uu paths.

### DESCLOSURE

### TECHNICAL SOLUTION

When the terminal switches back, the unicast link before switching is maintained and the maintained unicast link is used for switching back.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of UE to which implementations of the present disclosure is applied.
FIG. 4 illustrates an example 5G system structure to which an implementation of the present specification may be applied.
FIG. 5 shows a direct communication path switching scenario between PC5 and Uu.
FIG. 6 shows the 5G ProSe Direct Discovery procedure using Model A.
FIG. 7 shows procedure of 5G ProSe Direct Discovery with Model B.
FIG. 8a and FIG. 8b illustrate the Layer-2 link establishment procedure.
FIG. 9 shows the message flow for the establishment of PC5 security key using a generic container.
FIG. 10 shows a Layer-2 link maintenance procedure.
FIG. 11a and FIG. 11b illustrate procedures according to the first embodiment.
FIG. 12 shows the procedure of the UE according to disclosure of the present specification.
FIG. 13 shows the procedure of the base station according to disclosure of the present specification.

### MODE FOR INVENTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G NR (new radio).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

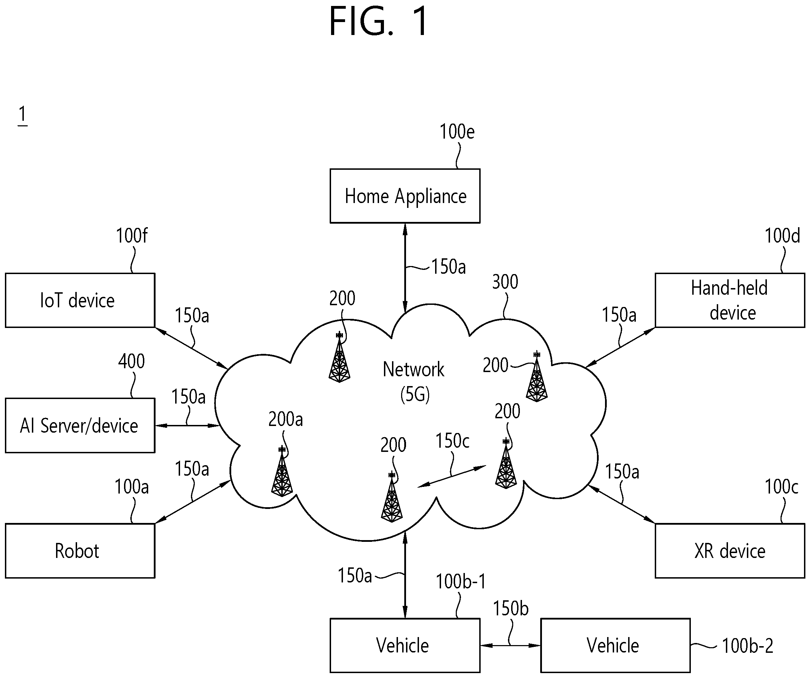

**FIG. 1** **shows an example of a communication system to which implementations of the present disclosure is applied.**

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/5G devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The loT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that can create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make self-determination to perform actions can be called intelligent robots. Robots can be classified as industrial, medical, home, military, etc., depending on the purpose or area of use. The robot can perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles can be seen as robots with autonomous driving functions.

Extended reality is collectively referred to as VR, AR, and MR. VR technology provides objects and backgrounds of real world only through computer graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

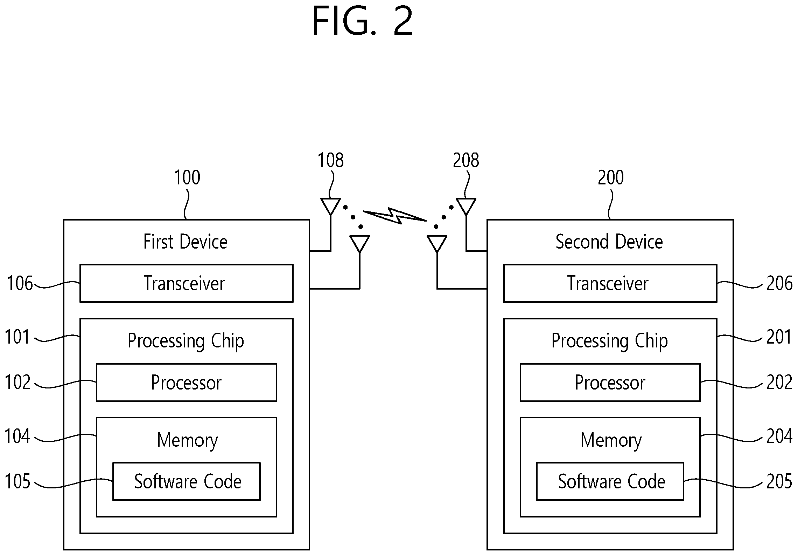

**FIG. 2** **shows an example of wireless devices to which implementations of the present disclosure is applied.**

In FIG. 2, The first wireless device 100 and/or the second wireless device 200 may be implemented in various forms according to use cases/services. For example, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1. The first wireless device 100 and/or the second wireless device 200 may be configured by various elements, devices/parts, and/or modules.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a firmware and/or a software code 105 which implements codes, commands, and/or a set of commands that, when executed by the processor 102, perform the descriptions, functions, procedures, suggestions, methods and/or operational flowcharts disclosed in the present disclosure. For example, the firmware and/or the software code 105 may implement instructions that, when executed by the processor 102, perform the descriptions, functions, procedures, suggestions, methods and/or operational flowcharts disclosed in the present disclosure. For example, the firmware and/or the software code 105 may control the processor 102 to perform one or more protocols. For example, the firmware and/or the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with Radio Frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a firmware and/or a software code 205 which implements codes, commands, and/or a set of commands that, when executed by the processor 202, perform the descriptions, functions, procedures, suggestions, methods and/or operational flowcharts disclosed in the present disclosure. For example, the firmware and/or the software code 205 may implement instructions that, when executed by the processor 202, perform the descriptions, functions, procedures, suggestions, methods and/or operational flowcharts disclosed in the present disclosure. For example, the firmware and/or the software code 205 may control the processor 202 to perform one or more protocols. For example, the firmware and/or the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as Physical (PHY) layer, Media Access Control (MAC) layer, Radio Link Control (RLC) layer, Packet Data Convergence Protocol (PDCP) layer, Radio Resource Control (RRC) layer, and Service Data Adaptation Protocol (SDAP) layer). The one or more processors 102 and 202 may generate one or more Protocol Data Units (PDUs), one or more Service Data Unit (SDUs), messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. For example, the one or more processors 102 and 202 may be configured by a set of a communication control processor, an Application Processor (AP), an Electronic Control Unit (ECU), a Central Processing Unit (CPU), a Graphic Processing Unit (GPU), and a memory control processor.

The one or more memories 104, 204 may be associated with the one or more processors 102, 202 and may store various forms of data, signals, messages, information, programs, codes, instructions, and/or commands. The one or more memories 104, 204 may comprise random access memory (RAM), dynamic RAM (DRAM), read-only memory (ROM), erasable programmable ROM (EPROM), flash memory, volatile memory, non-volatile memory, hard drives, registers, cache memory, computer-readable storage media, and/or combinations thereof. The one or more memories 104, 204 may be located inside and/or outside of the one or more processors 102, 202. Further, the one or more memories 104, 204 may be coupled to the one or more processors 102, 202 via various technologies, such as wired or wireless connections.

The one or more transceivers 106, 206 may transmit user data, control information, wireless signals/channels, etc. referred to in the descriptions, features, procedures, suggestions, methods, and/or flowcharts of operation disclosed herein to one or more other devices. The one or more transceivers 106, 206 may receive user data, control information, wireless signals/channels, etc. referred to in the descriptions, features, procedures, suggestions, methods, and/or flowcharts of operation disclosed herein from one or more other devices. For example, the one or more transceivers 106, 206 may be associated with the one or more processors 102, 202 and may transmit and receive wireless signals. For example, the one or more processors 102, 202 may control the one or more transceivers 106, 206 to transmit user data, control information, wireless signals, etc. to one or more other devices. Further, the one or more processors 102, 202 may control the one or more transceivers 106, 206 to receive user data, control information, wireless signals, etc. from the one or more other devices.

The one or more transceivers 106, 206 may be associated with one or more antennas 108, 208. Additionally and/or alternatively, the one or more transceivers 106, 206 may include one or more antennas 108, 208. The one or more transceivers 106, 206 may be configured to transmit and receive, via the one or more antennas 108, 208, user data, control information, wireless signals/channels, etc. referred to in the descriptions, features, procedures, suggestions, methods, and/or flowcharts of operation disclosed herein. As used herein, the one or more antennas 108, 208 may be a plurality of physical antennas, or a plurality of logical antennas (e.g., antenna ports).

The one or more transceivers 106, 206 may convert the received user data, control information, radio signals/channels, etc. from RF band signals to baseband signals in order to process the received user data, control information, radio signals/channels, etc. using the one or more processors 102, 202. The one or more transceivers 106, 206 may convert the processed user data, control information, radio signals/channels, etc. from baseband signals to RF band signals using the one or more processors 102, 202. To do so, the one or more transceivers 106, 206 may include (analog) oscillators and/or filters. For example, the one or more transceivers 106, 206 may up-convert an OFDM baseband signal to an OFDM signal via an (analog) oscillator and/or filter under the control of the one or more processors 102, 202, and transmit the up-converted OFDM signal at the carrier frequency. The one or more transceivers 106, 206 may receive the OFDM signal at the carrier frequency and, under the control of the one or more processors 102, 202, down-convert the OFDM signal to an OFDM baseband signal via an (analog) oscillator and/or filter.

Although not shown in FIG. 2, the wireless devices 100 and 200 may further include additional components. The additional components 140 may be variously configured according to types of the wireless devices 100 and 200. For example, the additional components 140 may include at least one of a power unit/battery, an Input/Output (I/O) device (e.g., audio I/O port, video I/O port), a driving device, and a computing device. The additional components 140 may be coupled to the one or more processors 102 and 202 via various technologies, such as a wired or wireless connection.

In the implementations of the present disclosure, a UE may operate as a transmitting device in Uplink (UL) and as a receiving device in Downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be adapted to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

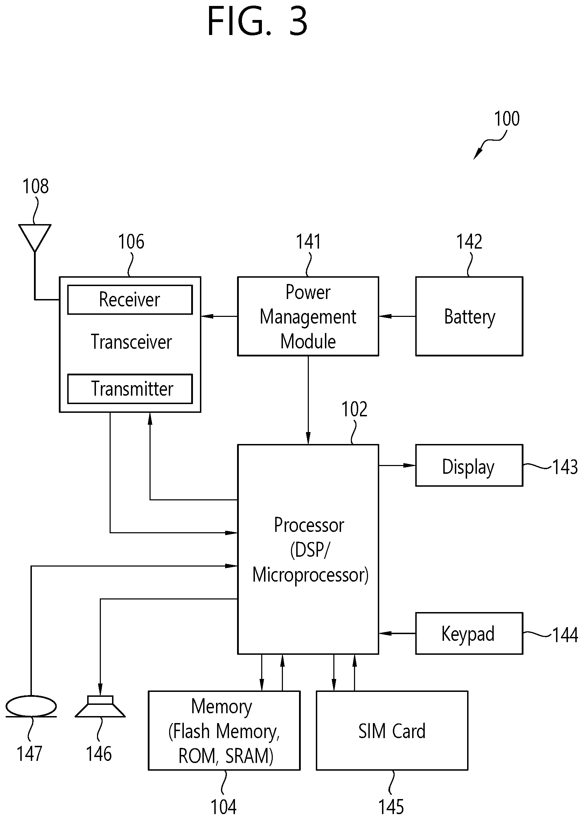

**FIG. 3** **shows an example of UE to which implementations of the present disclosure is applied.**

FIG. 3 shows an example of UE to which implementations of the present disclosure is applied.

Referring to FIG. 3, a UE 100 may correspond to the first wireless device 100 of FIG. 2.

A UE 100 includes a processor 102, a memory 104, a transceiver 106, one or more antennas 108, a power management module 141, a battery 142, a display 143, a keypad 144, a Subscriber Identification Module (SIM) card 145, a speaker 146, and a microphone 147.

The processor 102 may be adapted to implement the descriptions, functions, procedures, suggestions, methods and/or operational flowcharts disclosed in the present disclosure. The processor 102 may be adapted to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of DSP, CPU, GPU, a modem (modulator and demodulator). An example of the processor 102 may be found in SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 141 manages power for the processor 102 and/or the transceiver 106. The battery 142 supplies power to the power management module 141.

The display 143 outputs results processed by the processor 102. The keypad 144 receives inputs to be used by the processor 102. The keypad 144 may be shown on the display 143.

The SIM card 145 is an integrated circuit that is intended to securely store the International Mobile Subscriber Identity (IMSI) number and its related key, which are used to identify and authenticate subscribers on mobile telephony devices (such as mobile phones and computers). It is also possible to store contact information on many SIM cards.

The speaker 146 outputs sound-related results processed by the processor 102. The microphone 147 receives sound-related inputs to be used by the processor 102.

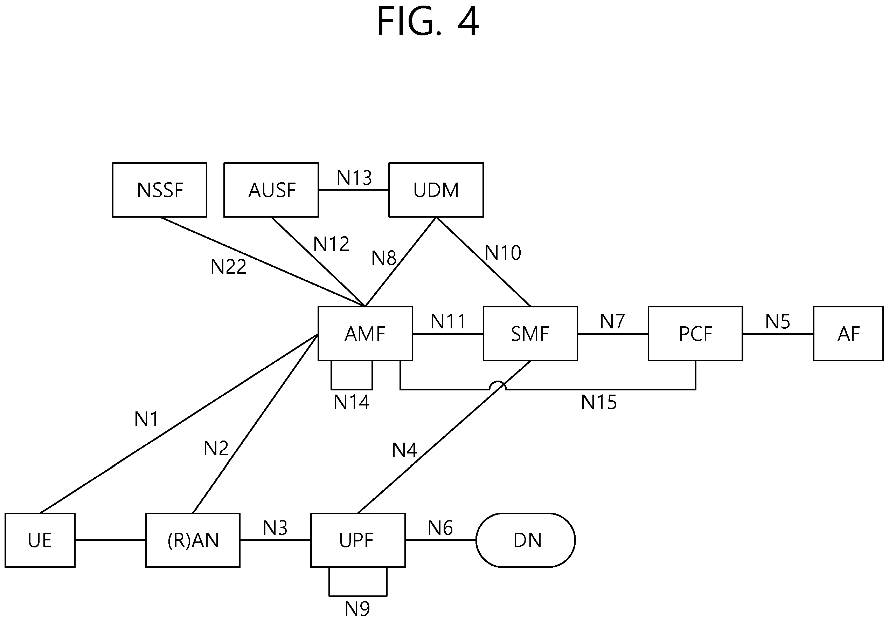

**FIG. 4** **illustrates an example 5G system structure to which an implementation of the present specification may be applied.**

The 5G system (5GS; 5G system) structure consists of the following network functions (NFs).
- AUSF (Authentication Server Function)
- AMF (Access and Mobility Management Function)
- DN (Data Network), e.g., operator services, internet access or third-party services
- USDF (Unstructured Data Storage Function)
- NEF (Network Exposure Function)
- I-NEF (Intermediate NEF)
- NRF (Network Repository Function)
- NSSF (Network Slice Selection Function)
- PCF (Policy Control Function)
- SMF (Session Management Function)
- UDM (Unified Data Management)
- UDR (Unified Data Repository)
- UPF (User Plane Function)
- UCMF (UE radio Capability Management Function)
- AF (Application Function)
- UE (User Equipment)
- (R)AN ((Radio) Access Network)
- 5G-EIR (5G-Equipment Identity Register)
- NWDAF (Network Data Analytics Function)
- CHF (Charging Function)
   In addition, the following network functions may be considered.
- N3IWF (Non-3GPP InterWorking Function)
- TNGF (Trusted Non-3GPP Gateway Function)
- W-AGF (Wireline Access Gateway Function)

FIG. 4 shows the 5G system structure of a non-roaming case using a reference point representation that shows how various network functions interact with each other.

In FIG. 4, UDSF, NEF and NRF are not described for clarity of the point-to-point diagram. However, all network functions shown may interact with UDSF, UDR, NEF and NRF as needed.

For clarity, the connection between the UDR and other NFs (e.g., PCFs) is not shown in FIG. 4. For clarity, the connection between NWDAF and other NFs (e.g. PCFs) is not shown in FIG. 4.

The 5G system architecture includes the following reference points.
- N1: the reference point between the UE and the AMF.
- N2: reference point between (R)AN and AMF.
- N3: Reference point between (R)AN and UPF.
- N4: reference point between SMF and UPF.
- N6: Reference point between UPF and data network.
- N9: reference point between two UPFs.

The following reference points show the interactions that exist between NF services in NF.
- N5: Reference point between PCF and AF.
- N7: reference point between SMF and PCF.
- N8: reference point between UDM and AMF.
- N10: reference point between UDM and SMF.
- N11: reference point between AMF and SMF.
- N12: reference point between AMF and AUSF.
- N13: reference point between UDM and AUSF.
- N14: reference point between two AMFs.
- N15: Reference point between PCF and AMF in case of non-roaming scenario, and reference point between PCF and AMF of visited network in case of roaming scenario.
- N16: reference point between two SMFs (in case of roaming, between the SMF of the visited network and the SMF of the home network)
- N22: reference point between AMF and NSSF.

In some cases, it may be necessary to connect two NFs to each other to service the UE.

V2X (vehicle-to-everything) communication will be described. For V2X communication, the following definitions may be used:
- V2X application: An application that uses one or more V2X services (e.g., active safety applications for vehicles, emergency warnings, vehicle safety and awareness, etc.). A V2X application may operate toward a V2X application server.
- V2X communication: Communication to support V2X services using Uu and/or PC5 reference points. V2X services are implemented through various types of V2X applications, such as vehicle-to-vehicle (V2V), vehicle-to-pedestrian (V2P), vehicle-to-infrastructure (V2I), and vehicle-to-network (V2N).
- V2X message: A dedicated messaging type for V2X services (e.g., intelligent transport system (ITS) messages).
- V2X service: A data service provided to V2X applications and optionally to V2X application servers. A V2X service belongs to one V2X service type. A V2X service is connected to one or more V2X applications, and a V2X application may be connected to one or more V2X services.
- V2X service type: A V2X service type identified by an ITS-AID (ITS application identifier) or a PSID (provider service identifier).

There are two operation modes for V2X communication: V2X communication via PC5 reference point and V2X communication via Uu reference point. These two operation modes may be used independently by the UE for transmission and reception.

V2X communication via PC5 reference point is supported by LTE and/or NR.

V2X communication via Uu reference point is supported by E-UTRA connected to 5GC and/or NR connected to 5GC. V2X communication via Uu reference point may only be unicast.

Switching between communication via PC5 and communication via Uu is described below.

### <Switching between PC5 and Uu>

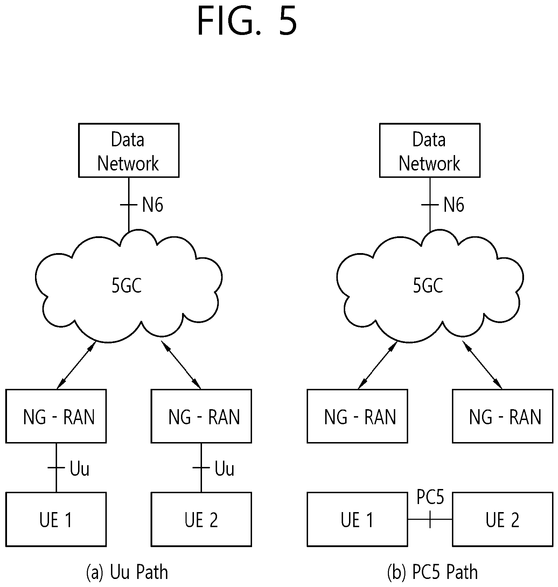

**FIG. 5** **shows a direct communication path switching scenario between PC5 and Uu.**

The direct communication path switching scenario between PC5 and Uu refers to switching between (a) Uu path and (b) PC5 path in FIG. 5.

"Direct communication path switching between PC5 and Uu reference points" refers to a procedure for switching between the Uu direct communication path and the PC5 direct communication path when a UE communicates with another UE. The direct communication path through the PC5 reference point means that communication with another UE is performed only using 5G ProSe Direct Communication. The direct communication path through the Uu reference point means that communication with another UE is performed through the network.

When switching between the direct communication path through the PC5 reference point and the direct communication path through the Uu reference point, the interruption of ProSe service for the UE should be minimized.

The PC5 discovery procedure may be preceded for switching from the Uu path to the PC5 path.

### <PC5 ProSe direct Discovery>

PC5 communication channel is used to deliver discovery messages through PC5, and discovery messages through PC5 is distinguished from other PC5 messages by AS (Access Stratum) layer.

Both Model A and Model B discovery are supported.
- Model A uses a single discovery protocol message (announcement/notification).
- Model B uses two discovery protocol messages (request and response).

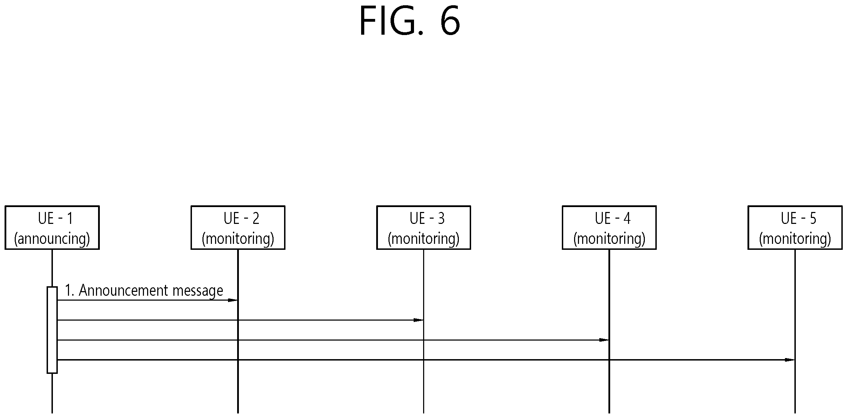

**FIG. 6** **shows the 5G ProSe Direct Discovery procedure using Model A.**

1. The Announcing UE sends an Announcement message. The Announcement message may include the Type of Discovery Message, ProSe Application Code or ProSe Restricted Code, security protection element, [metadata information]. The Application layer metadata information may be included as metadata in the Announcement message.

The Destination Layer-2 ID and Source Layer-2 ID are used to send the Announcement message.

The Monitoring UE determines the Destination Layer-2 ID for signalling reception.

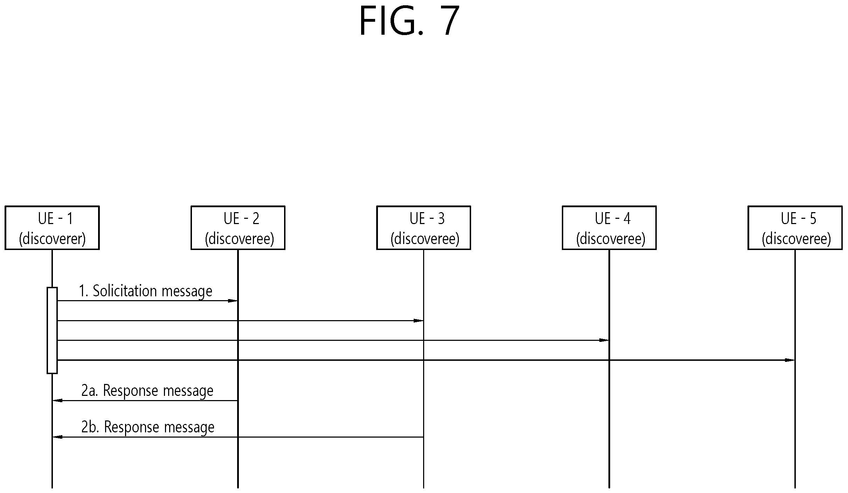

**FIG. 7** **shows procedure of 5G ProSe Direct Discovery with Model B.**
1. The Discoverer UE sends a Solicitation message. The Solicitation message may include Type of Discovery Message, ProSe Query Code, security protection element.

The Destination Layer-2 ID and Source Layer-2 ID are used to send the Solicitation message.

Discoveree UE determines the Destination Layer-2 ID for signaling reception.

2. The Discoveree UE that matches the solicitation message responds to the Discoverer UE with the Response message. The Response message may include Type of Discovery Message, ProSe Response Code, security protection element, [metadata information]. The Application layer metadata information may be included as metadata in the Response message.

The Source Layer-2 ID is used to send the Response message. The Destination Layer-2 ID is set to the Source Layer-2 ID of the received Solicitation message.

Layer-2 link establishment procedure may be performed after the PC5 Discovery procedure.

### <Layer-2 link establishment over PC5 reference point>

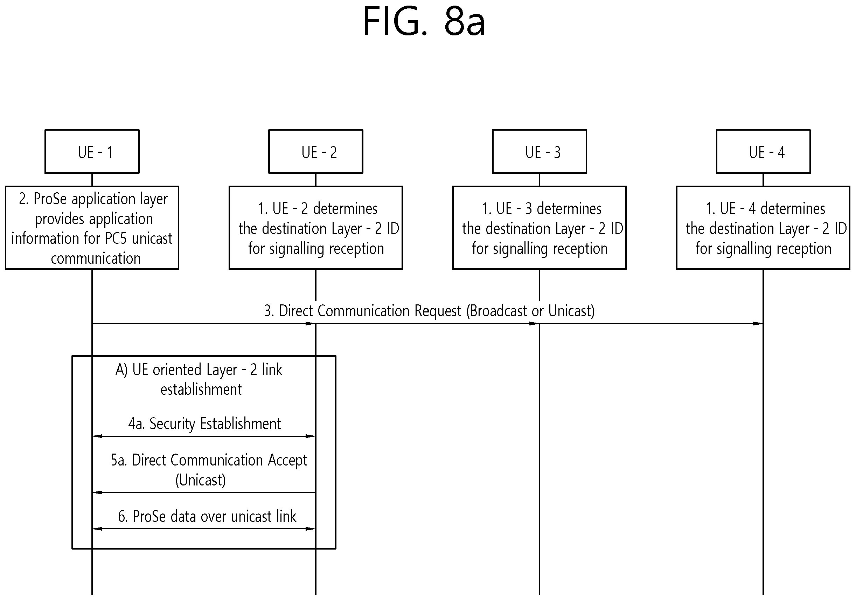

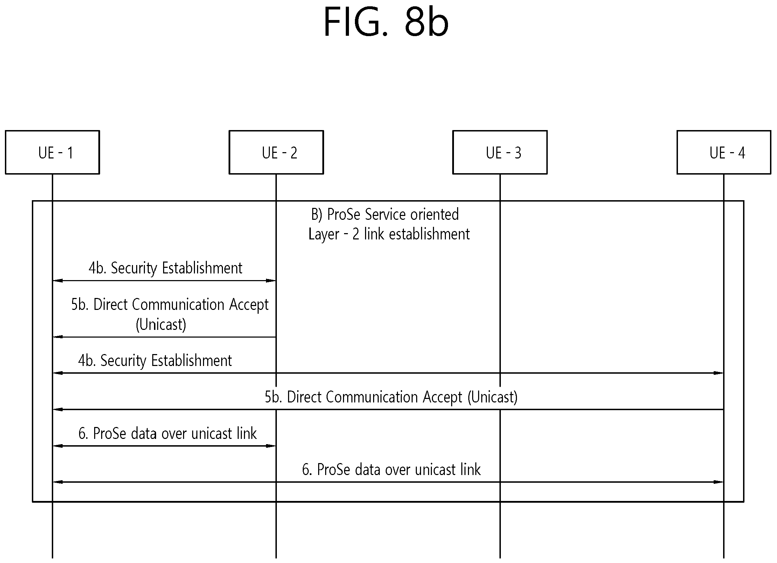

**FIG. 8a** **and** **FIG. 8b** **illustrate the Layer-2 link establishment procedure.**
1. The UE(s) determine the destination Layer-2 ID for signalling reception for PC5 unicast link establishment.
2. The ProSe application layer in UE-1 provides application information for PC5 unicast communication. The application information includes the ProSe Service Info, UE's Application Layer ID. The target UE's Application Layer ID may be included in the application information.

The ProSe application layer in UE-1 may provide ProSe Application Requirements for this unicast communication. UE-1 determines the PC5 QoS parameters and PFI.

If UE-1 decides to reuse the existing PC5 unicast link, the UE triggers the Layer-2 link modification procedure.

3. UE-1 sends a Direct Communication Request message to initiate the unicast layer-2 link establishment procedure. The Direct Communication Request message includes:
- Source User Info: the initiating UE's Application Layer ID (i.e. UE-1's Application Layer ID).
- If the ProSe application layer provided the target UE's Application Layer ID in step 2, the following information is included:
- Target User Info: the target UE's Application Layer ID (i.e. UE-2's Application Layer ID).
- ProSe Service Info: the information about the ProSe identifier(s) requesting Layer-2 link establishment.
- Security Information: the information for the establishment of security.

The source Layer-2 ID and destination Layer-2 ID are used to send the Direct Communication Request message. The destination Layer-2 ID may be broadcast or unicast Layer-2 ID. When unicast Layer-2 ID is used, the Target User Info shall be included in the Direct Communication Request message.

UE-1 sends the Direct Communication Request message via PC5 broadcast or unicast using the source Layer-2 ID and the destination Layer-2 ID.

A default PC5 DRX configuration may be used for transmitting and receiving of this message.

4. Security with UE-1 is established as below:

4a. If the Target User Info is included in the Direct Communication Request message, the target UE, i.e. UE-2, responds by establishing the security with UE-1.

4b. If the Target User Info is not included in the Direct Communication Request message, the UEs that are interested in using the announced ProSe Service(s) over a PC5 unicast link with UE-1 responds by establishing the security with UE-1.

When the security protection is enabled, UE-1 sends the following information to the target UE.

If IP communication is used, UE-1 sends the following information to the target UE:
- IP Address Configuration: For IP communication, IP address configuration is required for this link and indicates one of the following values: "DHCPv4 server" if only IPv4 address allocation mechanism is supported by the initiating UE(i.e., acting as a DHCPv4 server); or "IPv6 Router" if only IPv6 address allocation mechanism is supported by the initiating UE(i.e., acting as an IPv6 Router); or "DHCPv4 server & IPv6 Router" if both IPv4 and IPv6 address allocation mechanism are supported by the initiating UE; or "address allocation not supported" if neither IPv4 nor IPv6 address allocation mechanism is supported by the initiating UE.
- Link-Local IPv6 Address: a link-local IPv6 address formed locally based on RFC 4862 [17] if UE-1 does not support the IPv6 IP address allocation mechanism, i.e. the IP Address Configuration indicates" address allocation not supported".

When the security protection is enabled, UE-1 sends QoS Info to the target UE.
- QoS Info: the information about PC5 QoS Flow(s). For each PC5 QoS Flow, the PFI and the corresponding PC5 QoS parameters (i.e. PQI and conditionally other parameters such as MFBR/GFBR, etc.) and optionally the associated ProSe identifier(s).

When the security protection is enabled, UE-1 sends Optional PC5 QoS Rule(s)to the target UE.

The source Layer-2 ID is used for the security establishment procedure. The destination Layer-2 ID is set to the source Layer-2 ID of the received Direct Communication Request message.

Upon receiving the security establishment procedure messages, UE-1 obtains the peer UE's Layer-2 ID for future communication, for signaling and data traffic for this unicast link.

5. A Direct Communication Accept message is sent to UE-1 by the target UE(s) that has successfully established security with UE-1:

5a. (UE oriented Layer-2 link establishment) If the Target User Info is included in the Direct Communication Request message, the target UE, i.e. UE-2 responds with a Direct Communication Accept message if the Application Layer ID for UE-2 matches.

5b. (ProSe Service oriented Layer-2 link establishment) If the Target User Info is not included in the Direct Communication Request message, the UEs that are interested in using the announced ProSe Service(s) respond to the request by sending a Direct Communication Accept message (UE-2 and UE-4).

The Direct Communication Accept message includes:
- Source User Info: Application Layer ID of the UE sending the Direct Communication Accept message.
- QoS Info: the information about PC5 QoS Flow(s). For each PC5 QoS Flow, the PFI and the corresponding PC5 QoS parameters requested by UE-1 (i.e. PQI and conditionally other parameters such as MFBR/GFBR, etc.) and optionally the associated ProSe identifiers(s).
- Optional PC5 QoS Rule(s).
- If IP communication is used:
   -- IP Address Configuration: For IP communication, IP address configuration is required for this link and indicates one of the following values:
      -- " DHCPv4 server " if only IPv4 address allocation mechanism is supported by the target UE, i.e., acting as a DHCPv4 server; or
      -- "IPv6 Router" if only IPv6 address allocation mechanism is supported by the target UE, i.e., acting as an IPv6 Router; or
      -- "DHCPv4 server & IPv6 Router" if both IPv4 and IPv6 address allocation mechanism are supported by the target UE; or
      -- "address allocation not supported" if neither IPv4 nor IPv6 address allocation mechanism is supported by the target UE.
- Link-Local IPv6 Address: a link-local IPv6 address formed locally based on RFC 4862 [17] if the target UE does not support the IPv6 IP address allocation mechanism, i.e. the IP Address Configuration indicates "address allocation not supported", and UE-1 included a link-local IPv6 address in the Direct Communication Request message. The target UE shall include a non-conflicting link-local IPv6 address.

If both UEs (i.e. the initiating UE and the target UE) are selected to use link-local IPv6 address, they shall disable the duplicate address detection defined in RFC 4862 [17].

When either the initiating UE or the target UE indicates the support of IPv6 routing, the corresponding address configuration procedure would be carried out after the establishment of the layer 2 link, and the link-local IPv6 addresses are ignored.

The ProSe layer of the UE that established PC5 unicast link passes the PC5 Link Identifier assigned for the unicast link and the PC5 unicast link related information down to the AS layer. The PC5 unicast link related information includes Layer-2 ID information (i.e. source Layer-2 ID and destination Layer-2 ID). This enables the AS layer to maintain the PC5 Link Identifier together with the PC5 unicast link related information.

Two UEs may negotiate the PC5 DRX configuration in the AS layer, and the PC5 DRX parameter values can be configured per pair of source and destination Layer-2 IDs in the AS layer.

6. ProSe data is transmitted over the established unicast link as below:

The PC5 Link Identifier and PFI are provided to the AS layer, together with the ProSe data.

Optionally in addition, the Layer-2 ID information (i.e. source Layer-2 ID and destination Layer-2 ID) is provided to the AS layer.

It is up to UE implementation to provide the Layer-2 ID information to the AS layer.

UE-1 sends the ProSe data using the source Layer-2 ID (i.e. UE-1's Layer-2 ID for this unicast link) and the destination Layer-2 ID (i.e. the peer UE's Layer-2 ID for this unicast link).

PC5 unicast link is bi-directional, therefore the peer UE of UE-1 can send the ProSe data to UE-1 over the unicast link with UE-1.

### <Security procedures>

The unicast mode security mechanism is used to provide unicast mode 5G ProSe Direct Communication security.

That is, the security procedure during PC5 unicast link establishment includes the key establishment procedure as follows.

### 1. key establishment

At each step of the flow (and the possible multiple times that step 2 can be run), the Key_Est_Info contains the different data that is required for key establishment. Such data is transparent to the PC5 layer, i.e. the PC5 layer does not need to understand the content of Key_Est_info.

NOTE: The endpoint in the UEs that understands the contents of Key_Est_Info may be an application on the UEs. Between the PC5 layer and the application layer on the vehicles, the information contained in Key_Est_Info can be passed in an implementation-specific manner, e.g. as one block or several IEs.

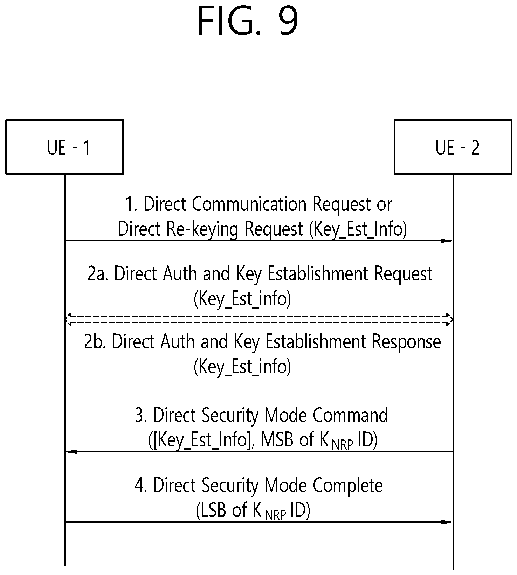

**FIG. 9** **shows the message flow for the establishment of PC5 security key using a generic container.**

FIG. 9 shows the message flows for establishing security at PC5 using the key established at the layer above PC5. The need for both steps 2a and 2b (and the number of times both steps 2a and step 2b are run) depends on the authentication method being used.

The steps are as follows and apply to establishment of the initial key or rekeying:
1. In the case, UE_1 determines it needs to establish a PC5 connection with another UE, UE_1 sends the Direct Communication Request message and this message is received by UE_2. In case of rekeying an existing connection with UE_2, UE_1 shall send a Direct Rekeying Request message to UE_2 instead of Direct Communication Request. The Direct Communication Request message shall include the Key_Est_Info unless UE_1's signalling integrity security policy is NOT NEEDED. In the former case, the message may include Key_Est_Info. The Direct Rekeying Request message shall include Key_Est_Info unless the Null integrity algorithm is currently in use.
2. This step is optional and may be run multiple times depending on the authentication method used.
   a. UE_2 shall send a Direct Auth and Key Establish message including the Key_Est_Info to UE_1.
   b. UE_1 shall send respond with a Direct Auth and Key Establish Response message including the Key_Est_Info to UE_2.
3. In case the UE_2 decides to activate the signaling integrity protection, UE_2 shall calculate (if not already done) K_{NRP}. UE_2 shall send a Direct Security Mode Command messages to UE_1. These messages may include Key_Est_Info if need by the authentication method being used and shall contain MSB of K_{NRP} ID unless the Null integrity algorithm is selected by UE_2. The MSB of K_{NRP} ID are chosen so that they uniquely identify K_{NRP} at UE_2.
4. On receiving the Direct Security Mode Command, UE_1 shall calculate (if not already done) K_{NRP} based on Key_Est_Info (if provided). UE_1 shall execute the following procedures unless the Null integrity algorithm is selected by UE_2: UE_1 shall choose the LSB of K_{NRP} ID so that they uniquely identify K_{NRP} at UE_1. UE_1 shall form K_{NRP} ID from the received MSB of K_{NRP} ID and its chosen LSB of K_{NRP} ID and shall store the complete K_{NRP} ID with K_{NRP}.

UE_1 shall send a Direct Security Mode Complete message to UE_2 which shall contain the LSB of K_{NRP} ID. UE_2 shall form K_{NRP} ID from its chosen MSB of K_{NRP} ID and the received LSB of K_{NRP} ID and shall store the complete K_{NRP} ID with K_{NRP}.

In order to establish a new Layer-2 link via PC5, a security establishment procedure must be performed.

When switching back to the PC5 path after switching from the PC5 path to the Uu path, if a new Layer-2 link via PC5 is established again, a security establishment procedure must be performed, which may result in inefficiency. An efficient method may be proposed to solve this problem.

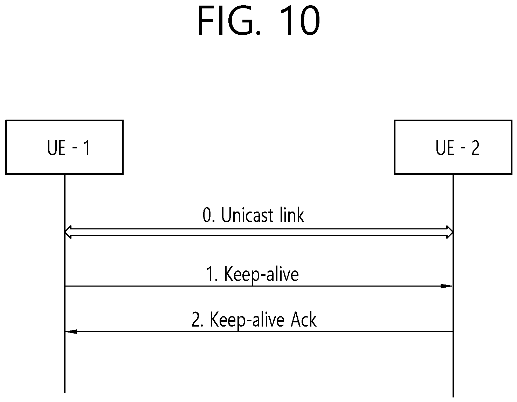

**FIG. 10** **shows a Layer-2 link maintenance procedure.**

The PC5 Signaling Protocol shall support keep-alive functionality that is used to detect if a particular PC5 unicast link is still valid. Either side of the PC5 unicast link can initiate the layer-2 link maintenance procedure (i.e. keep-alive procedure), based on for example triggers from the AS layer or internal timers. The UEs shall minimize the keep-alive signaling, e.g. cancel the procedure if data are successfully received over the PC5 unicast link.

0. UE-1 and UE-2 have an established unicast link.
1. Based on trigger conditions, UE-1 sends a Keep-alive message to UE-2 in order to determine the status of the PC5 unicast link.

5G ProSe direct link keep-alive procedure defined in clause 7.2.5 of TS 24.554 V1.1.0 (2022-1) may be applied to determine the exact triggers for the keep-alive messages. For example, the trigger can be based on a timer associated with the Layer-2 link. The timer can be reset with a successful reception event defined by TS 38.300 [12].

2. Upon reception of the Keep-alive message, UE-2 responds with a Keep-alive Ack message.

The UE initiating the keep-alive procedure shall determine the follow-up actions based on the result of the signalling, e.g. proceed with implicit layer-2 link release.

5G ProSe direct link keep-alive procedure defined in clause 7.2.5 of TS 24.554 V1.1.0 (2022-1) may be applied to determine the follow-up actions. For example, a successful reception event can also cancel the layer-2 link release if received in time.

### <Disclosure of the present specification>

The method for supporting switching back from the proposed Uu path to the PC5 path may be composed of a combination of one or more of the following operations/configurations/steps.

In this specification, a path may mean a communication path, a routing path, a connection path, a reference point, an interface, etc.

In this specification, UE (User Equipment) and terminal are used interchangeably.

In this specification, PC5 unicast link, unicast link, Layer-2 link, PC5 unicast connection, and Layer-2 connection are used interchangeably.

This specification mainly describes the proposed content.

The method for supporting switching back from the Uu path to the PC5 path may be applied not only to ProSe services but also to other services (e.g., UAS (Uncrewed Aerial Systems) services, V2X services, etc.).

### I. First embodiment

When the PC5 signal strength of the unicast link between two UEs becomes less than a configured signal strength threshold, the two UEs may switch the communication path from PC5 to Uu. The configured signal strength threshold may be provided to the UE as a 5G ProSe policy/parameter, may be provided by the NG-RAN, or may be implementation-specific information/value to the UE. This may be applied throughout this specification. Later, there may be a case where two UEs can communicate over the PC5 reference point with satisfactory signal strength. For example, because a temporary obstacle no longer exists between the two UEs. In order to switch back from Uu to PC5, the two UEs need to discover each other over the PC5 reference point and establish a unicast link again. That is, in order to switch from the Uu path to the PC5 path, The UE must discover whether the other UE is nearby through the ProSe Direct Discovery procedure, and when the other UE is detected as being in close proximity, a procedure to establish a PC5 unicast link between the two UEs must be performed. This PC5 unicast link establishment procedure may be completed by exchanging multiple PC5-S messages including the Security Establishment procedure. The PC5-S message is a control plane signaling message exchanged between UEs through the PC5 reference point to perform various procedures related to the PC5 unicast link (e.g., procedures such as PC5 unicast link formation, modification, maintenance, and release). Therefore, these tasks may take some time and be inefficient because PC5 discovery messages and PC5 signaling messages are exchanged between the two UEs. In addition, it may be uncertain when the UEs should trigger ProSe Direct Discovery or Layer-2 link establishment when trying to communicate again through the PC5 reference point.

It may be proposed to maintain the established unicast link to reuse the unicast link when switching back from Uu to PC5, after the path switching to Uu. The maintained unicast link may also be used to check whether it is possible to switch back to the PC5 path.

The switching back method to the PC5 path proposed in this specification may be efficient because, as described above, two UEs do not need to perform the ProSe Direct Discovery procedure and the PC5 unicast link establishment procedure to switch from the Uu path to the PC5 path.

In order to switch back to the PC5 path (or return to the PC5 path) from the Uu path, the following may be proposed:
- After path switching from PC5 to Uu is made due to the PC5 signal strength of the unicast link lower than configured signal strength threshold, the unicast link between two UEs may be not released but kept.
- One UE of the unicast link may keep checking the PC5 signal strength of the unicast link through the Layer-2 link maintenance procedure. Based on the checking results, the UE may determine whether to perform switching back to PC5 path as below:
   -- If the PC5 signal strength of the unicast link is consecutively good (i.e. not lower than configured signal strength threshold) during a configured time, the UE may determine to perform switching back to PC5 path by reusing the unicast link.

The PC5 signal strength may mean the PC5 signal level, the PC5 signal quality, the Layer-2 link status/quality, or the unicast link status/quality.
-- Otherwise, the UE may determine not to perform switching back to PC5 path, thus, the unicast link may be released.

- If the Layer-2 link maintenance procedure fails, e.g. because the UE initiating the procedure does not receive the Keep-alive Ack message from peer UE, the peer UE does not receive the Keep-alive message from the initiating UE, the unicast link may be locally released.

After switching to the Uu path, the unicast link may be released, and a UE may switch back from the Uu path to the PC5 path without reusing the unicast link.

The following drawings are created to explain specific examples of this specification. The names of specific devices or names of specific signals/messages/fields described in the drawings are presented as examples, and therefore, the technical features of this specification are not limited to the specific names used in the following drawings.

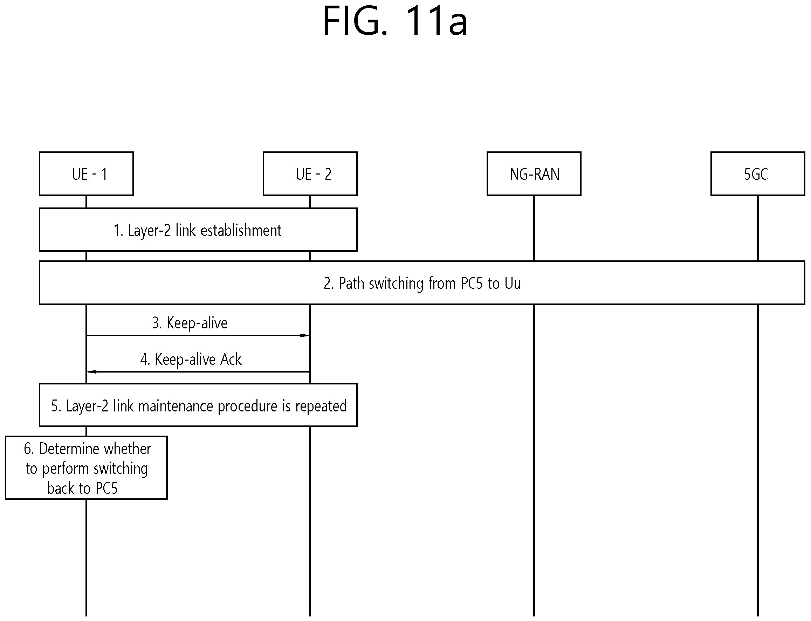

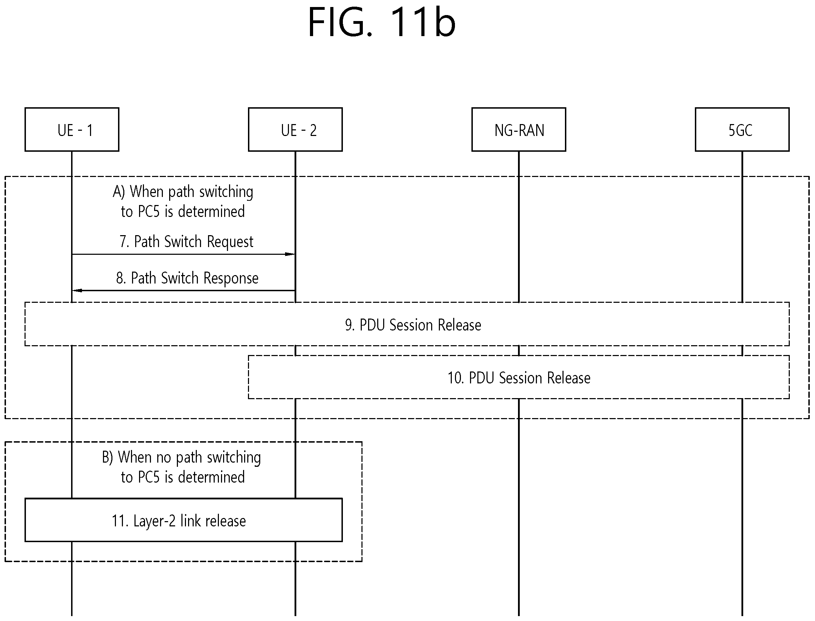

**FIG. 11a** **and** **FIG. 11b** **illustrate procedures according to the first embodiment.**

UE-1 and UE-2 may be served by the same PLMN or can be served by different PLMNs.
1. In order to communicate via PC5 reference point, UE-1 and UE-2 may establish a Layer-2 link. UE-1 and UE-2 may exchange data via the established unicast link. That is, UE-1 and UE-2 may communicate with each other via PC5 path.
2. If the PC5 signal strength of the unicast link is less than the configured signal strength threshold, path switching from PC5 to Uu may be performed. After path switching to Uu, UE-1 and UE-2 may exchange data via 5GC.

After path switching to Uu, UE-1 and UE-2 may not release the unicast link. In this case, the unicast link may be maintained. During the Layer-2 link establishment procedure or the path switching procedure from PC5 to Uu, UE-1 and UE-2 may negotiate whether to maintain the unicast link after path switching to Uu.

Maintaining a unicast link may be interpreted as suspending or holding the use of the unicast link. Maintaining a unicast link may be interpreted as maintaining the PC5 link identifier, Layer-2 ID, IP address (if it is an IP type Layer-2 link), etc. used for the unicast link.

Alternatively, the negotiation may be performed through another existing Layer-2 link related procedure (e.g., Layer-2 link modification procedure) or may be performed through a newly defined procedure.

The negotiation may be initiated by UE-1 requesting to maintain the PC5 path (i.e., unicast link) or notifying UE-2 that it supports maintaining the PC5 path (i.e., unicast link) even after switching to the Uu path. Then, the negotiation may be performed by UE-2 responding to it (e.g., Ack/Accept/accept/support or Nack/Reject/not supporting). Or, conversely, the negotiation may be performed by UE-2 initiating the negotiation and UE-1 responding to it.

Regardless of whether the above negotiation is performed, when switching from the PC5 path to the Uu path or after switching, UE-1 and UE-2 may exchange PC5-S messages to maintain the unicast link.
- After switching to the Uu path, continued maintenance or negotiation between UEs for the unicast link (i.e., the PC5 path) of the UE may always be performed.
- Or, the maintenance or negotiation may be performed because the PC5 path is preferred. For example, the maintenance or negotiation may be performed based on a path selection/switching policy/preference. The path selection/switching policy/preference may be configured per ProSe service (i.e., ProSe identifier) or may be configured for all ProSe services.
- Or, the maintenance or negotiation may be performed based on an instruction or configuration. For example, the instruction or configuration may be performed via a ProSe policy/parameter. The above ProSe policy/parameters may be set per ProSe service (i.e. ProSe identifier) or may be set for all ProSe services.
- The maintenance or negotiation may be performed based on the PC5 signal strength of the unicast link being lower than the signal strength threshold configured to cause switching to the Uu path, but higher than another signal strength threshold (a value lower than the signal strength threshold configured to cause switching to the Uu path). This may be the case where the PC5 signal strength of the unicast link is considered to be insufficient for successfully and reliably transmitting and receiving data through the PC5 path, but sufficient for maintaining the unicast link itself. For example, passengers in two vehicles traveling toward the same destination may communicate with each other through the PC5 path using their respective terminals. As the two vehicles move away from each other, if the PC5 signal strength becomes lower than the signal strength threshold set to cause switching to the Uu path, the terminal(s) of the two vehicles may switch to the Uu path and continue communicating. However, if the terminals of the two vehicles are still at a distance that can maintain a unicast link, and if the terminals of the two vehicles are likely to perform communication using the PC5 path again as they get closer to each other depending on the driving conditions of the two vehicles, the maintenance of the unicast link or negotiation between the terminals of the two vehicles may be performed.

The maintenance or negotiation may be based on various reasons/information as described above.

Other suggestions for the details of the path switching from PC5 to Uu may be used. In this specification, the unicast link may be maintained after the path switching to Uu.

While the unicast link is maintained after the switching from the PC5 path to the Uu path, a link identifier update for a unicast link procedure may or may not be performed.

3. UE-1 may initiate a Layer-2 link maintenance procedure by sending a Keep-alive message to UE-2 to determine the status of the PC5 unicast link.

If data is successfully received through the PC5 unicast link as described in FIG. 10, the PC5 unicast link may be considered valid. Therefore, there is no need to transmit a keep-alive message.

In contrast, since data transmission is switched to the Uu path through 5GC in step 2, there is no data transmission through the PC5 unicast link. Therefore, a Layer-2 link maintenance procedure may be performed to determine the status of the PC5 unicast link.

In order to check (or measure) the PC5 signal strength of the unicast link, a Layer-2 link maintenance procedure may be used. Alternatively, for this, a newly defined procedure and/or newly defined messages (e.g., PC5-S messages, PC5 discovery messages, user data/traffic, etc.) may be used.

The terminal may perform switching back by considering the switch-back-attempt timer and the good-link-quality counter.

The terminal may attempt switching back based on the expiration of the switch-back-attempt timer.

Based on the good-link-quality counter, the UE may attempt to switch back. For example, if the signal strength of the PC5 link is higher than a configured threshold, the UE may increase the good-link-quality counter. The good-link-quality counter may have its maximum number. Based on the good-link-quality counter reaching its maximum number, the UE may attempt to switch back.

The UE may start a switch-back-attempt timer. Additionally, the UE may set the good-link-quality counter to 0.

The switch-back-attempt timer may be provided to UE-1 as a 5G ProSe policy/parameter.

Or, the switch-back-attempt timer may be provided by NG-RAN. Or, it may be an implementation-specific timer.

The maximum number of the good-link-quality counter and the switch-back-attempt timer may be determined through negotiation between two UEs.

The switch-back-attempt timer may be appropriately set considering the period of performing the Layer-2 link maintenance procedure, the maximum number of good-link-quality, etc.

4. UE-2 may respond with a Keep-alive Ack message.

If the Layer-2 link maintenance procedure fails (for example, because UE-1 did not receive the Keep-alive Ack message from UE-2 or UE-2 did not receive the Keep-alive message from UE-1), the unicast link may be released locally.

In addition, the unicast link may be released at the request of the application layer (or upper layer) of the UE. For example, the unicast link may be released based on various reasons such as the related application being inactive or disabled, or there being no more traffic.

When UE-1 receives a Keep-alive Ack message from UE-2, UE-1 may check the PC5 signal level of the unicast link and perform the following based on the check result:
- If the PC5 signal strength of the unicast link is less than the configured signal strength threshold, UE-1 may set the good-link-quality counter to 0.

The configured signal strength threshold may be the same information/value as the configured signal strength threshold that causes switching to the Uu path mentioned in step 2, or may be different information/value. For example, the configured signal strength threshold for setting the good-link-quality counter to 0 may be set to a higher value than the configured signal strength threshold that causes switching to the Uu path.

The configured signal strength threshold may be configured in the UE, provided by the NG-RAN, or provided by 5GC (e.g., as a ProSe Policy/Parameter).
- Otherwise, UE-1 may increase the good-link-quality counter by 1.

5. Layer-2 link maintenance procedure may be repeated until the good-link-quality counter reaches a maximum number of good-link-quality (e.g., 3, 5, 8, 10, etc.) or the switch-back-attempt timer expires.

The maximum number of good-link-quality may be typically set to a value greater than 1 to evaluate how stable the unicast link is (i.e., whether the PC5 signal strength is not consistently/consecutively lower than the configured signal strength threshold). However, it may also be set to 1.

The maximum number of good-link-quality may be provided by UE-1 as a 5G ProSe Policy/Parameter. Or, the maximum number of good-link-quality may be provided by NG-RAN.

6. UE-1 can decide whether to perform switching back to PC5 path as follows:
- If the good-link-quality counter reaches the maximum number of good-link-quality counters, UE-1 may decide to perform a path switch to PC5.
- If the good-link-quality counter does not reach the maximum number of good-link-quality counters before the switch-back-attempt timer expires, UE-1 may decide not to perform a path switch to PC5.

The Layer-2 link maintenance procedure may have a maximum number of times it is allowed to be performed (e.g., 15 times, 20 times, etc.).

If the good-link-quality counter does not reach the maximum number of good-link-quality counters even after performing the Layer-2 link maintenance procedure the maximum number of times it is allowed to be performed, UE-1 may decide not to perform a switch back to PC5 path.

UE-1 may decide to perform a switch back to PC5 path based on the signal strength of the maintained Layer-2 link (unicast link).

Determining whether to perform a switch back to the PC5 path may be interpreted as determining whether switching to the PC5 path is possible, determining whether switching to the PC5 path is feasible, etc. On the other hand, not performing a switch back to the PC5 path may be interpreted as determining whether switching to the PC5 path is not possible, determining whether switching to the PC5 path is not feasible, etc.

If UE-1 decides to perform a switch back to the PC5 path, step 7 to step 10 described below may be performed.

7. UE-1 may send a path switching request message to UE-2 to trigger a switch from Uu to PC5.

8. UE-2 may respond with a path switching response message.

Once the path switching from Uu to PC5 is completed, UE-1 and UE-2 may exchange data over the unicast link.

The above-mentioned path switching to PC5 may be interpreted as switching back to PC5 path, reusing the unicast link, resuming the unicast link, etc.

That is, path switching to PC5 may be performed by reusing the maintained unicast link.

The Path Switch Request/Response message, which is a PC5-S message used for path switching to PC5, may be an example. A message with a different name may be defined and used for path switching to PC5, or an existing PC5-S message may be utilized.

The Path Switch Request message may include information indicating switching to PC5 path, information indicating reusing the unicast link, information indicating resuming the unicast link, etc.

The Layer-2 link modification procedure may be performed instead of or after exchanging the Path Switch Request/Response message for path switching back to PC5.

9. After path switching to PC5, if the PDU session of UE-1 used to communicate with UE-2 is no longer needed, the PDU session of UE-1 may be released.

10. If the PDU session of UE-2 used to communicate with UE-1 is no longer needed after path switching to PC5, the PDU session of UE-2 may be released.

If UE-1 decides not to perform path switching to PC5, step 11 may be performed.

11. The unicast link between UE-1 and UE-2 may be released.

In FIG. 11, it is described that UE-1 determines whether to switch back to PC5 path, but UE-2 may also determine this. Or, after one UE decides to route switch back to PC5, it may make a final decision on route switching back to PC5 after confirming with the counterpart UE of the unicast link. Or, after one UE decides to route switch back to PC5, it may make a final decision on route switching back to PC5 after confirming with the network (NG-RAN or 5GC or Application Function/Application Server).

### II. Second embodiment

When the PC5 signal strength of the unicast link between the two UEs becomes less than the configured signal strength threshold, the two UEs may switch their communication path from PC5 to Uu. Later, there may be a case where the two UEs can communicate via the PC5 reference point with satisfactory signal strength, because the temporary obstacle between the two UEs no longer exists. In order to switch back from Uu to PC5, the two UEs must discover each other via the PC5 reference point and re-establish the unicast link. This may take some time. In addition, it may be uncertain when the UE(s) should trigger ProSe Direct Discovery or Layer-2 link establishment in order to communicate again via the PC5 reference point.

It may be proposed to maintain the established unicast link after switching back to Uu, so that the unicast link can be reused when switching back from Uu to PC5. The maintained unicast link may also be used to determine whether switching back to the PC5 path is possible.

In order to switch back from the Uu path to the PC5 path (or return to the PC5 path), the following may be proposed:
- The unicast link between the two UEs may be maintained without being released after the path switching from PC5 to Uu is performed because the PC5 signal strength of the unicast link is lower than the set signal strength threshold.
- One UE of the unicast link may continue to check the PC5 signal strength of the unicast link through a Layer-2 link maintenance procedure. Depending on the check result, the UE may decide whether to switch back to the PC5 path as follows:
- If the PC5 signal strength of the unicast link is determined to be good for a set time (i.e., not lower than the set signal strength threshold), the UE may decide to reuse the unicast link and switch back to the PC5 path.
- Otherwise, the UE may decide not to perform the switching back to the PC5 path, and thus the unicast link may be released.
- If the Layer-2 link maintenance procedure fails, for example. If the UE initiating the procedure does not receive a Keep-alive Ack message from the peer UE, if it the peer UE does not receive a Keep-alive message from the initiating UE, the peer UE may release the unicast link locally.

After switching to the Uu path, the unicast link may be released, so that the unicast link may be switched back from the Uu path to the PC5 path without being reused.

In order to explain the second embodiment, this is described later with reference to FIG. 11.
1. In order to communicate through the PC5 reference point, UE-1 and UE-2 may establish a Layer-2 link. UE-1 and UE-2 may exchange data through the established unicast link.
2. If the PC5 signal strength of the unicast link is less than the configured signal strength threshold, path switching from PC5 to Uu may be performed. After path switching to Uu, UE-1 and UE-2 may exchange data via 5GC.

After path switching to Uu, UE-1 and UE-2 may not release the unicast link. In this case, the unicast link may be maintained. During the Layer-2 link establishment procedure or the path switching procedure from PC5 to Uu, UE-1 and UE-2 may negotiate whether to maintain the unicast link after path switching to Uu. The negotiation on whether to maintain the unicast link may be based on the Path Selection policy (e.g. PC5 preferred) and/or the Path Switching policy (e.g. direct PC5 allowed).

Other proposals may be used for details on path switching from PC5 to Uu. In this specification, the unicast link may be maintained after path switching to Uu.

3. UE-1 may initiate Layer-2 link maintenance procedure by sending Keep-alive message to UE-2 to determine the status of PC5 unicast link.

The UE may initiate switch-back-attempt timer.

The switch-back-attempt timer may be provided by 5G ProSe policy/parameter in UE-1.

4. UE-2 may respond with Keep-alive Ack message.

If the Layer-2 link maintenance procedure fails (e.g., UE-1 did not receive Keep-alive Ack message from UE-2 or UE-2 did not receive Keep-alive message from UE-1), the unicast link may be released locally.

When UE-1 receives Keep-alive Ack message from UE-2, UE-1 may measure PC5 signal level of unicast link.

5. UE-1 may repeat Layer-2 link maintenance procedure until switch-back-attempt timer expires.

6. Based on the PC5 signal level of the unicast link measured through the Layer-2 link maintenance procedure, UE-1 may determine whether to perform switching back to the PC5 path.

That is, UE-1 may measure the PC5 signal strength of the unicast link with UE-2 through the Layer-2 link maintenance procedure at least once until the switch-back-attempt timer expires. Based on the measured result, UE-1 may determine whether to switch to the PC5 path. For example, if i) the measured PC5 signal strength is determined to be good at least once, ii) is determined to be stable, or iii) is determined to be not lower than the set signal strength threshold, UE-1 may determine to switch to the PC5 path. Conversely, if i) the measured PC5 signal strength is determined to be bad at least once, ii) is determined to be unstable, or iii) is determined to be lower than the set signal strength threshold, UE-1 may determine not to switch to the PC5 path.

Unlike the above, the switch-back-attempt timer may not be applied or considered. In this case, UE-1 may measure the PC5 signal strength of the unicast link with UE-2 through one or more Layer-2 link maintenance procedures, and determine whether to switch to the PC5 path based on the measurement result. An example of how to determine this may be referred to above.

The number of times the Layer-2 link maintenance procedure is performed may be set in the UE. Or, the number of times the above Layer-2 link maintenance procedures are performed may be implementationally determined.

If UE-1 decides to perform switching to PC5, step 7 to step 10 described below may be performed.

7. UE-1 may send a path switching request message to UE-2 to trigger switching from Uu to PC5.

8. UE-2 may respond with a path switching response message.

When path switching from Uu to PC5 is completed, UE-1 and UE-2 may exchange data over the unicast link.

For path switching back to PC5, a Layer-2 link modification procedure may be performed instead of or after exchanging the Path Switch Request/Response message.

9. After path switching to PC5, if the PDU session of UE-1 used to communicate with UE-2 is no longer needed, the PDU session of UE-1 may be released.

10. If the PDU session of UE-2 used to communicate with UE-1 is no longer needed after path switching to PC5, the PDU session of UE-2 may be released.

If UE-1 decides not to perform path switching to PC5, step 11 may be performed.

11. The unicast link between UE-1 and UE-2 may be released.

When the UE maintains the unicast link after switching to the Uu path and performs switching back to the PC5 path, the UE may support switching back from the Uu path to the PC5 path by reusing the unicast link.

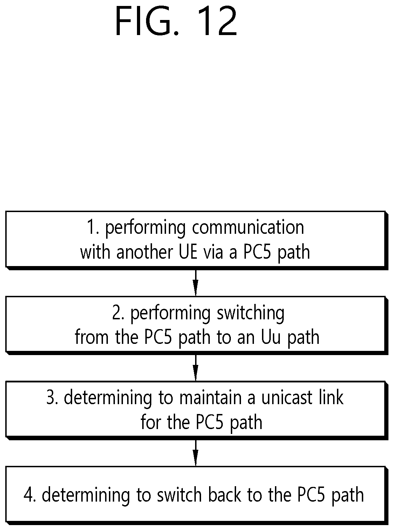

**FIG. 12** **shows the procedure of the UE according to disclosure of the present specification.**
1. The UE may perform communication with another UE via a PC5 path.
2. The UE may perform switching from the PC5 path to an Uu path.
3. The UE may determine to maintain a unicast link for the PC5 path.
4. The UE may determine to switch back to the PC5 path, based on a PC5 signal level of the unicast link.

The UE may perform switching back to the PC5 path by using the unicast link, based on the determining to switch back.

The step of determining to switch back may be performed, based on a switching back timer.

The UE may measure a PC5 signal level of the unicast link.

The step of determining to switch back may be performed, based on the PC5 signal level of the unicast link being higher than a threshold.

The UE may release a PDU session related to the Uu path.

The step of performing switching from the PC5 path to the Uu path may be performed, based on the PC5 signal level of the unicast link

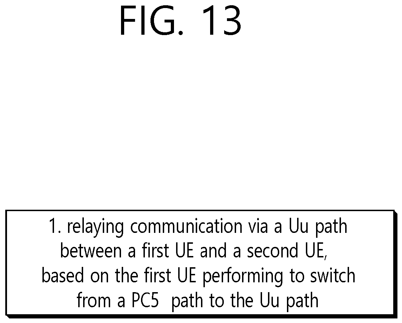

**FIG. 13** **shows the procedure of the base station according to disclosure of the present specification.**
1. The base station may relay communication via a Uu path between a first UE (User Equipment) and a second UE, based on the first UE performing to switch from a PC5 path to the Uu path.

The first UE may determine to maintain a unicast link for the PC5 path after the first UE performed to switch from the PC5 path to the Uu path.

The first UE may determine to switch back to the PC5 path, based on a PC5 signal level of the unicast link.

Hereinafter, an apparatus for performing communication according to some embodiments of the present specification will be described.

For example, a UE may include a processor, a transceiver, and a memory.

For example, a processor may be configured to be operably coupled with a memory and a processor.

The processor may perform: communicating with another UE through a PC5 path; switching from the PC5 path to a Uu path; determining to maintain a unicast link for the PC5 path; and determining, on the basis of PC5 signal strength of the unicast link, to switch back to the PC5 path.

Hereinafter, a processor for providing communication according to some embodiments of the present specification will be described.

The processor is configured to: communicating with another UE through a PC5 path; switching from the PC5 path to a Uu path; determining to maintain a unicast link for the PC5 path; and determining, on the basis of PC5 signal strength of the unicast link, to switch back to the PC5 path.

Hereinafter, a non-volatile computer readable medium storing one or more instructions for providing multicast service in wireless communication according to some embodiments of the present specification will be described.

According to some embodiments of the present disclosure, the technical features of the present disclosure may be directly implemented as hardware, software executed by a processor, or a combination of the two. For example, in wireless communication, a method performed by a wireless device may be implemented in hardware, software, firmware, or any combination thereof. For example, the software may reside in RAM memory, flash memory, ROM memory, EPROM memory, EEPROM memory, registers, hard disk, removable disk, CD-ROM, or other storage medium.

Some examples of a storage medium are coupled to the processor such that the processor can read information from the storage medium. Alternatively, the storage medium may be integrated into the processor. The processor and storage medium may reside in the ASIC. For another example, a processor and a storage medium may reside as separate components.

Computer-readable media can include tangible and non-volatile computer-readable storage media.

For example, non-volatile computer-readable media may include random access memory (RAM), such as synchronization dynamic random access memory (SDRAM), read-only memory (ROM), or non-volatile random access memory (NVRAM). Read-only memory (EEPROM), flash memory, magnetic or optical data storage media, or other media that can be used to store instructions or data structures or Non-volatile computer readable media may also include combinations of the above.

Further, the methods described herein may be realized at least in part by computer-readable communication media that carry or carry code in the form of instructions or data structures and that can be accessed, read, and/or executed by a computer.

According to some embodiments of the present disclosure, a non-transitory computer-readable medium has one or more instructions stored thereon. The stored one or more instructions may be executed by a processor of the base station.

The stored one or more instructions cause the processors to: communicating with another UE through a PC5 path; switching from the PC5 path to a Uu path; determining to maintain a unicast link for the PC5 path; and determining, on the basis of PC5 signal strength of the unicast link, to switch back to the PC5 path.

The present specification may have various effects.

For example, when a terminal performs switching back, switching back to the PC5 path can be performed efficiently by reusing the unicast link before switching.

Effects that can be obtained through specific examples of the present specification are not limited to the effects listed above. For example, various technical effects that a person having ordinary skill in the related art can understand or derive from this specification may exist. Accordingly, the specific effects of the present specification are not limited to those explicitly described herein, and may include various effects that can be understood or derived from the technical characteristics of the present specification.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method. Other implementations are within the scope of the following claims.

## Claims

1. A method for performing communication, performed by a UE (User Equipment), comprising:
performing communication with another UE via a PC5 path;
performing switching from the PC5 path to an Uu path;
determining to maintain a unicast link for the PC5 path; and
determining to switch back to the PC5 path, based on a PC5 signal level of the unicast link.

2. The method of claim 1, further comprising:
performing switching back to the PC5 path by using the unicast link, based on the determining to switch back.

3. The method of claim 1,
wherein the step of determining to switch back is performed, based on a switching back timer.

4. The method of claim 1, further comprising:
measuring a PC5 signal level of the unicast link.

5. The method of claim 1,
wherein the step of determining to switch back is performed, based on the PC5 signal level of the unicast link being higher than a threshold.

6. The method of claim 1, further comprising:
releasing a PDU session related to the Uu path.

7. The method of claim 1,
wherein the step of performing switching from the PC5 path to the Uu path is performed, based on the PC5 signal level of the unicast link

8. A UE (User Equipment) to perform communication, comprising:
a transceiver; and
a processor,
wherein the processor performs operation comprising:
performing communication with another UE via a PC5 path;
performing switching from the PC5 path to an Uu path;
determining to maintain a unicast link for the PC5 path; and
determining to switch back to the PC5 path, based on a PC5 signal level of the unicast link.

9. The method of claim 8, wherein the operations further comprising:
performing switching back to the PC5 path by using the unicast link, based on the determining to switch back.

10. The method of claim 8,
wherein the step of determining to switch back is performed, based on a switching back timer.

11. The method of claim 8, wherein the operations further comprising:
measuring a PC5 signal level of the unicast link.

12. The method of claim 8,
wherein the step of determining to switch back is performed, based on the PC5 signal level of the unicast link being higher than a threshold.

13. The method of claim 8, wherein the operations further comprising:
releasing a PDU session related to the Uu path.

14. The method of claim 8,
wherein the step of performing switching from the PC5 path to the Uu path is performed, based on the PC5 signal level of the unicast link

15. A method for performing communication, performed by a NG-RAN (Next Generation Radio Access Network), comprising:
relaying communication via a Uu path between a first UE (User Equipment) and a second UE, based on the first UE performing to switch from a PC5 path to the Uu path;
wherein the first UE determines to maintain a unicast link for the PC5 path after the first UE performed to switch from the PC5 path to the Uu path,
wherein the first UE determines to switch back to the PC5 path, based on a PC5 signal level of the unicast link.

16. A NG-RAN (Next Generation Radio Access Network) to perform communication, comprising:
a transceiver; and
a processor,
wherein the processor performs operation comprising:
relaying communication via a Uu path between a first UE (User Equipment) and a second UE, based on the first UE performing to switch from a PC5 path to the Uu path;
wherein the first UE determines to maintain a unicast link for the PC5 path after the first UE performed to switch from the PC5 path to the Uu path,
wherein the first UE determines to switch back to the PC5 path, based on a PC5 signal level of the unicast link.

17. An apparatus in mobile communication, comprising:
at least one processor; and
at least one memory storing instructions and operably electrically connectable with the at least one processor to perform operation comprising:
performing communication with another apparatus via a PC5 path;
performing switching from the PC5 path to an Uu path;
determining to maintain a unicast link for the PC5 path; and
determining to switch back to the PC5 path, based on a PC5 signal level of the unicast link.

18. A non-volatile computer readable storage medium having recorded instructions,
wherein the instructions, based on being executed by one or more processors, cause the one or more processors to perform operation comprising:
performing communication with another UE (User Equipment) via a PC5 path;
performing switching from the PC5 path to an Uu path;
determining to maintain a unicast link for the PC5 path; and
determining to switch back to the PC5 path, based on a PC5 signal level of the unicast link.
